# EUROPÄISCHE PATENTSCHRIFT

(11) **EP 4 226 489 B1**
(45) Veröffentlichungstag und Bekanntmachung des Hinweises auf die Patenterteilung: **22.04.2026**
(21) Anmeldenummer: 21785749.9
(22) Anmeldetag: 02.09.2021
(51) Int. Cl.: H02K 49/10, H02K 41/06

(54) **TAUMELGETRIEBE MIT EINER ANTRIEBSWELLE UND EINER ABTRIEBSWELLE**
WOBBLE TRANSMISSION HAVING AN INPUT SHAFT AND AN OUTPUT SHAFT
TRANSMISSION OSCILLANTE DOTÉE D'UN ARBRE D'ENTRÉE ET D'UN ARBRE DE SORTIE

(30) Priorität: 12.10.2020 AT 508762020
(43) Veröffentlichungstag der Anmeldung: 16.08.2023
(73) Patentinhaber: IIES - Inspired Innovation Engineering Services E.U., 1230 Wien (AT)
(72) Erfinder: PUCHHAMMER, Gregor, 1230 WIEN (AT)
(74) Vertreter: Hübscher & Partner Patentanwälte GmbH
(86) Internationale Anmeldenummer: PCT/AT2021/060306
(87) Internationale Veröffentlichungsnummer: WO 2022/077039

(56) Entgegenhaltungen:
- CN-A- 105 071 633
- DE-A1- 102014 001 263

## Beschreibung

### Technisches Gebiet

Die Erfindung bezieht sich auf ein Taumelgetriebe mit einer Antriebswelle und einer Abtriebswelle, einem umfänglich wenigstens eine Zahnreihe aufweisenden Stator, einem umfänglich wenigstens eine Zahnreihe aufweisenden, auf einem mit der Antriebswelle starr verbundenen, um einen Winkel gegenüber der Antriebswelle ausgeschwenkten Wellenabschnitt frei drehbar gelagerten Rotor, der vom Stator durch einen unmittelbar zwischen den Zahnreihen des Stators und des Rotors liegenden, umfänglich durchgängigen Luftspalt beabstandet ist und wenigstens einem Magneten zum Erzeugen eines magnetischen Flusses zwischen Rotor und Stator, wobei Rotor und Stator eine unterschiedliche Anzahl an Zahnreihen aufweisen und axial benachbarte Zahnreihen des Stators und des Rotors zueinander verdreht angeordnet sind.

### Stand der Technik

Aus dem Stand der Technik sind magnetische Getriebe bekannt. So zeigt beispielsweise die KR101462832B1 eine Magnetkupplung, bei der Stator und Rotor hohlzylindrisch ausgeführt und aus mehreren Permanentmagneten gefertigt sind. Stator und Rotor sind konzentrisch zueinander angeordnet, wobei ein eine Zahnreihe aufweisender Modulator im Luftspalt zwischen Stator und Rotor angeordnet ist.

Die AT321051B zeigt ebenso ein magnetisches Getriebe mit drei konzentrisch zueinander angeordneten Elementen. Das äußerste und das innerste Element sind Polringe, bei denen sich die Pole umfangseitig abwechseln. Diese Pole können entweder Pole eines Permanentmagneten sein, oder von dem dritten, zwischen dem äußersten und dem innersten Element angeordneten Element induziert werden.

Aus dem Stand der Technik sind weiters Taumelgetriebe bekannt. Die DE102014001263A1 zeigt ein magnetisches Taumelgetriebe mit einem Stator und einem zumindest teilweise in dem Stator gelagerten Rotor. Der Rotor ist frei rotierbar auf einem Wellenabschnitt der Antriebswelle gelagert, welches um einen Winkel gegenüber der Antriebswelle ausgeschwenkt ist. Der Rotor weist an seiner Außenseite wenigstens eine Zahnreihe mit einzelnen Magneten auf, der Stator verfügt über zwei Zahnreihen auf seiner Innenseite, die zueinander verdreht sind, wobei die Zahnreihen des Stators und des Rotors umfänglich durch einen möglichst dünnen Luftspalt voneinander getrennt werden. Die Magneten der Zahnreihen sind so angeordnet, dass sich die magnetischen Feldlinien in der von der Zahnreihe aufgespannten Ebene, also im Wesentlichen quer zur Antriebs- und der Abtriebswelle, über benachbarte Zähne einer Zahnreihe schließen. Da der Rotor auf dem ausgeschwenkten Wellenabschnitt der Antriebswelle gelagert ist, wird der Rotor bei Drehung der Antriebswelle in eine Taumelbewegung versetzt. Daraufhin dreht sich der Rotor auf Grund der Reluktanzkraft und die Zahnreihen des Rotors richten sich zu der gegenüber der ersten Zahnreihe des Stators verdreht angeordneten zweiten Zahnreihe so aus, das vom Luftspalt getrennte Zähne der Zahnreihen des Stators und des Rotors wieder möglichst deckungsgleich liegen. So wird der magnetische Widerstand zwischen Rotor und Stator minimiert und der magnetische Fluss zwischen den gegenüberliegenden Zahnreihen des Rotors und des Stators maximiert und somit ein Drehmoment übertragen.

Die CN105071633A offenbart ein Taumelgetriebe, welches Zahnreihen aufweist, deren Zähne aus jeweiligen Permanentmagneten gebildet sind.

Nachteilig am Stand der Technik ist allerdings, dass eine hohe Anzahl an Permanentmagneten verbaut werden muss. Die Geometrie der Permanentmagnetoberflächen bestimmt den Verlauf des magnetischen Flusses und damit die Effizienz der magnetischen Kopplung. Deswegen müssen die Permanentmagnete mittels komplizierter Fertigungsschritte sphärisch gestaltet werden, was durch die Härte und Sprödigkeit üblicher Permanentmagneten zusätzlich verkompliziert wird. Außerdem erschwert das Permanentmagnetfeld die Assemblierung der Bauteile, was insgesamt den Zeit-, Material- und Kostenaufwand der Produktion erhöht.

### Darstellung der Erfindung

Der Erfindung liegt somit die Aufgabe zugrunde, ein magnetisches Taumelgetriebe aufzuzeigen, dessen magnetische Komponenten trotz effizienter, magnetischer Kupplungseigenschaften und genau bestimmbarem Feldlinienverlauf einfach bearbeitet werden können und somit die Assemblierung des magnetischen Taumelgetriebes erleichtert wird.

Die in der Form eines Taumelgetriebes gemäß Anspruch 1 vorgeschlagene Erfindung löst die gestellte Aufgabe dadurch, dass der Stator und der Rotor, und damit auch die Zahnreihen aus ferromagnetischem Material bestehen und der Dipol des Magneten quer zu einer von einer Zahnreihe aufgespannten Ebene verläuft. Der Dipol ist dabei ein Vektor, der zwischen dem Ein- und Austrittspunkt der Feldlinien verläuft. Diese Austrittspunkte können, je nach verwendetem Magneten, beispielsweise am Nord-bzw. Südpol eines Permanentmagneten, oder an den Enden der Spule eines Elektromagneten sein. Die Zähne der Zahnreihen des Stators und des Rotors bestehen also nicht selbst aus Magneten, sondern werden über den Magneten magnetisiert. Der Magnet kann entweder am Stator oder am Rotor angebracht sein. Ist er am Stator angebracht, verläuft der Dipol parallel entlang zur Antriebswelle. Befindet sich der Magnet am Rotor, verläuft der Dipol parallel entlang zum ausgeschwenkten Wellenabstand. Die durch diese Anordnung des Magneten entstehenden Feldlinienverläufe werden für den Fall beschrieben, dass der Magnet am Stator angeordnet ist. Beim ersten Feldlinienverlauf weisen sowohl Stator als auch Rotor wenigstens zwei Zahnreihen auf, laufen die Feldlinien vom Magneten durch eine erste Zahnreihe des Stators, überbrücken den Luftspalt in die gegenüberliegende Zahnreihe des Rotors, überqueren über den Rotor den Abstand zur zweiten Zahnreihe des Rotors und überbrücken dort wieder den Luftspalt zur zweiten Zahnreihe des Stators und passieren diesen, um von dort wieder in den Magneten zu münden und die Feldlinie zu schließen. Beim zweiten Feldlinienverlauf weist Rotor oder Stator nur eine Zahnreihe auf, sodass die Feldlinien keine axial benachbarten Zahnreihen passieren können. Die Feldlinien passieren also über die erste Zahnreihe des Rotors/Stators den Luftspalt in die einzige Zahnreihe des Stators/Rotors, und laufen durch diese einzige Zahnreihe des Stators/Rotors, um an der Stelle derselben Zahnreihe den Luftspalt ein zweites Mal zu passieren, an denen der magnetische Widerstand zur zur ersten Zahnreihe axial beabstandeten zweiten Zahnreihe des Rotors/Stators am geringsten ist. Die Feldlinien schließen sich also nicht innerhalb der von den Zahnreihen aufgespannten Ebenen, wie im Stand der Technik, sondern immer über mindestens zwei axial benachbarte, zueinander verdrehte Zahnreihen des Stators oder Rotors. Für den Fachmann ist dabei klar, dass die Feldlinien bei einer Anordnung des Magneten am Rotor die oben beschriebenen Komponenten nur in einer unterschiedlichen Reihenfolge durchlaufen, der resultierende technische Effekt und die Ausrichtung der Feldlinien allerdings derselbe ist. Dabei spielt die exakte Lage des Dipols relativ zum Rotor oder Stator keine Rolle, solange die Feldlinien aufgrund der räumlichen Lage des Dipols den oben beschriebenen Verlauf nehmen. Wirkt keine äußere Kraft über die Antriebswelle, richten sich die Zähne mehrerer Zahnreihen des Stators und des Motors im Magnetfeld so aneinander aus, dass der Abstand zwischen den gegenüberliegenden, vom Luftspalt beabstandeten Zahnreihen und somit der magnetische Widerstand minimiert wird. Wird der Rotor aufgrund des ausgeschwenkten Wellenabschnitts der Antriebswelle verkippt, richten sich nach bekannter Weise unterschiedliche Zahnreihen des Rotors bzw. Stators aneinander aus, wobei ein Drehmoment auf den Stator übertragen wird. Umfänglich benachbarte Zahnreihen des Stators bzw. des Rotors können so zueinander verdreht sein, dass sie auf Lücke versetzt sind. Auch können axial beabstandete Zahnreihen so ausgestaltet sein, dass sie Klauenpole bilden.

Um das Taumelgetriebe unabhängig von einer externen Stromversorgung und dadurch energieeffizienter und robuster auszugestalten, kann der Magnet ein Permanentmagnet sein. So kann insbesondere bei der Verwendung des Taumelgetriebes für wartungsarme Anwendungen eine potentielle Fehlerquelle, nämlich die Energieversorgung eines Elektromagneten, ausgeschlossen werden. Durch die Verwendung ferromagnetischer Materialien für den Stator und den Rotor werden darüber hinaus die komplizierten Fertigungsschritte am spröden Permanentmagnetmaterial reduziert.

Um trotz einfacher Assemblierungsbedingungen ein homogenes Magnetfeld zu erreichen, kann der Magnet ein konzentrisch zur Antriebswelle angeordneter Ringmagnet sein. Ein solcher Ringmagnet kann einfach an, bzw. um den Stator angeordnet werden, um einen möglichst homogenen Verlauf der magnetischen Feldlinien innerhalb des Taumelgetriebes zwischen Rotor und Stator zu gewährleisten. In einer besonders bevorzugten Ausführungsform kann der Ringmagnet zweipolig und axial magnetisiert sein, da sich so alle erfindungsgemäßen Vorteile des Taumelgetriebes mit einem einfach herzustellenden Magneten umsetzen lassen.

Um eine möglichst kompakte Bauform bei möglichst homogenem Magnetfeld zu erreichen, kann der Magnet ein konzentrisch zum Wellenabschnitt angeordneter Ringmagnet sein. Damit würde der Magnet innerhalb des Taumelgetriebes angeordnet sein, was den benötigten Bauraum minimiert und dennoch einen möglichst homogenen Verlauf der magnetischen Feldlinien innerhalb des Taumelgetriebes zwischen Rotor und Stator zu gewährleistet. Durch die Anordnung konzentrisch zum Wellenabschnitt ändert sich die räumliche Ausrichtung des Ringmagneten mit der Taumelbewegung des Rotors.

Das übertragene Drehmoment auf den Rotor ist von der Feldstärke des auf ihn wirkenden magnetischen Feldes abhängig. Diese kann im Betrieb bei einem Magneten mit konstanter Feldstärke und räumlicher Position nicht justiert werden. Um die Höhe des übertragenen Drehmoments dennoch einstellen zu können, wird daher vorgeschlagen, dass ein Elektromagnet zum Erzeugen eines weiteren magnetischen Flusses zwischen Rotor und Stator vorgesehen ist. Dadurch kann über die Position, Stromrichtung und die Stromstärke des Elektromagneten ein weiteres Magnetfeld erzeugt werden, welches das bestehende Magnetfeld des Magneten, und damit das auf den Rotor übertragene Drehmoment, stufenlos stärkt oder schwächt.

Die Feldliniendichte nimmt mit zunehmender Entfernung vom Dipol ab. Insbesondere wenn mehrere Zahnreihen für den Stator bzw. den Rotor vorgesehen sind, kann dies in einer Schwächung der nutzbaren magnetischen Oberfläche, also der Feldlinien pro Zahnoberfläche, resultieren. Eine Verbesserung der räumlichen Verteilung der magnetischen Feldlinien kann dadurch erreicht werden, dass ein zweiter, zum ersten Magneten axial beabstandeter Magnet mit antiparallelem Dipol vorgesehen ist. Durch die Überlagerung der Felder der beiden Magnete kann somit insbesondere in den Randbereichen des Stators und des Rotors die Feldliniendichte in den Zahnreihen und damit das übertragene Drehmoment erhöht werden. Bei einer statorseitigen Anordnung des zweiten Magneten bedeutet "axial" entlang der Antriebswelle, bei einer rotorseitigen Anordnung entlang des Wellenabschnitts.

Trotz des generell sehr geringen Wartungsaufwandes von magnetischen Taumelgetrieben ist die für Wartungsarbeiten schwer zugängliche Verbindung zwischen Wellenabschnitt und Rotor durch die Taumelbewegung des Rotors abrasiven Kräften ausgesetzt. Um daher den Materialverschleiß an dieser Stelle zu reduzieren, wird vorgeschlagen, dass der Rotor über Kugellager an dem Wellenabschnitt gelagert ist. Die Kugellager ermöglichen dabei eine möglichst reibungsfreie Drehbewegung des Rotors um den Wellenabschnitt.

Die Taumelbewegung des Rotors erschwert die Übertragung des Drehmoments auf die Abtriebswelle. Um bei einfachen Fertigungsbedingungen die axiale Kraftübertragung der Taumelbewegung bei der Drehmomentübertragung auf die Abtriebswelle zu minimieren, kann daher der Rotor mit der Abtriebswelle über ein eine Feder für den Taumelausgleich umfassendes Gelenk verbunden sein. Das Gelenk ist bevorzugterweise in Drehrichtung möglichst steif, um ein unerwünschtes Weiterdrehen der Abtriebswelle zu verhindern.

### Kurze Beschreibung der Erfindung

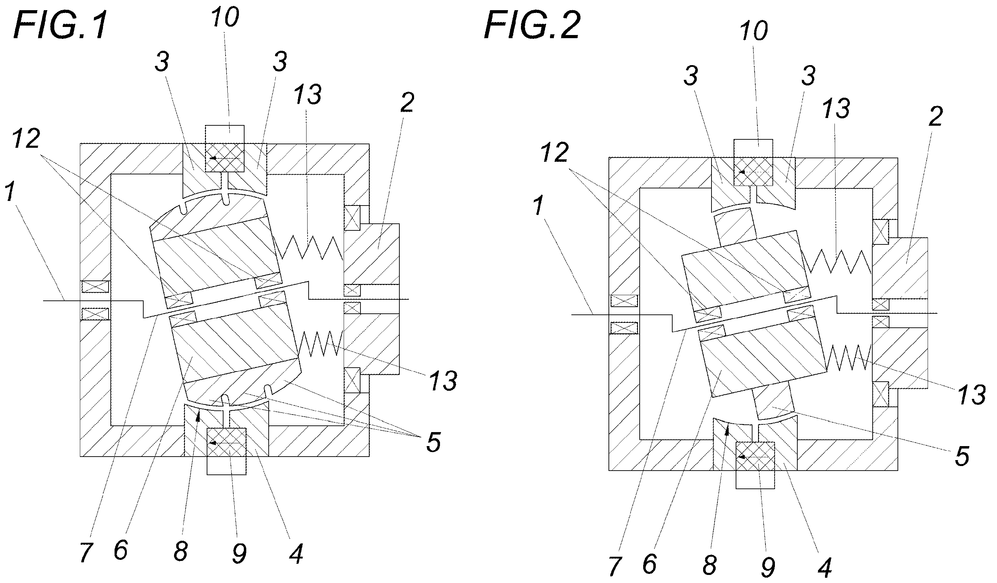

In der Zeichnung ist der Erfindungsgegenstand beispielsweise dargestellt. Es zeigen
- Fig. 1: einen Schnitt durch ein erfindungsgemäßes Taumelgetriebe mit zwei Zahnreihen am Stator und drei Zahnreihen am Rotor, einem statorseitig angeordneten, permanenten Ringmagneten und einem zuschaltbaren Elektromagneten,
- Fig. 2: einen Schnitt durch ein erfindungsgemäßes Taumelgetriebe mit zwei Zahnreihen am Stator und einer Zahnreihe am Rotor, einem statorseitig angeordneten, permanenten Ringmagneten und einem zuschaltbaren Elektromagneten,

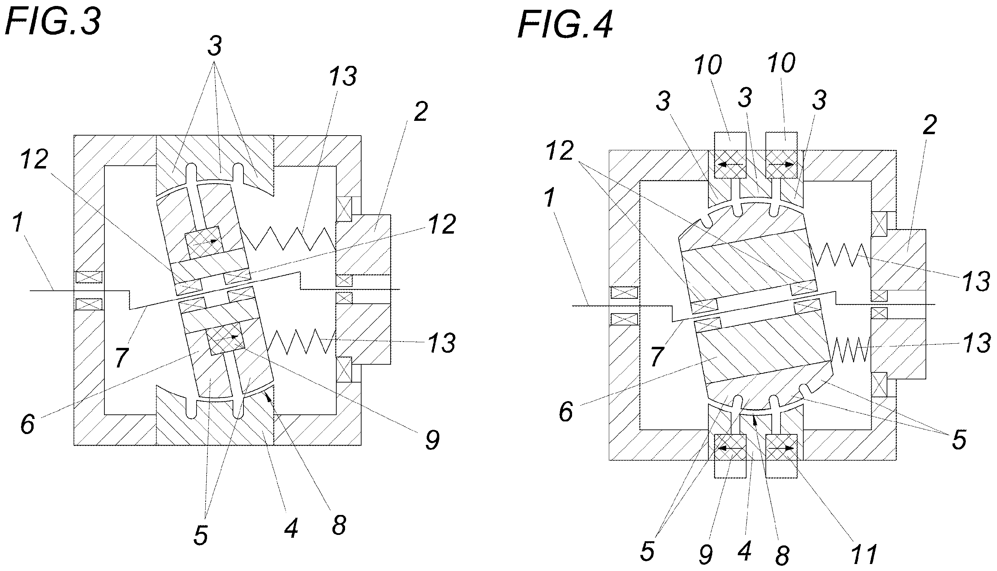

- Fig. 3: einen Schnitt durch ein erfindungsgemäßes Taumelgetriebe mit drei Zahnreihen am Stator und zwei Zahnreihen am Rotor, sowie einen rotorseitig angeordneten permanenten Ringmagneten,
- Fig. 4: einen Schnitt durch ein erfindungsgemäßes Taumelgetriebe mit drei Zahnreihen am Stator und vier Zahnreihen am Rotor, sowie zwei umgekehrt polarisierte, statorseitig angeordnete permanente Ringmagnete,
- Fig. 5: einen Schnitt durch ein erfindungsgemäßes Taumelgetriebe mit vier Zahnreihen am Stator und drei Zahnreihen am Rotor, sowie zwei umgekehrt polarisierte, statorseitig angeordnete permanente Ringmagnete,
- Fig. 6: einen Schnitt durch einen Stator und Rotor mit eingezeichnetem Verlauf der magnetischen Feldlinien und
- Fig. 7: eine schematische Teilansicht der Anordnung von zwei Zahnreihen des Rotors innerhalb dreier Zahnreihen des Rotors

### Wege zur Ausführung der Erfindung

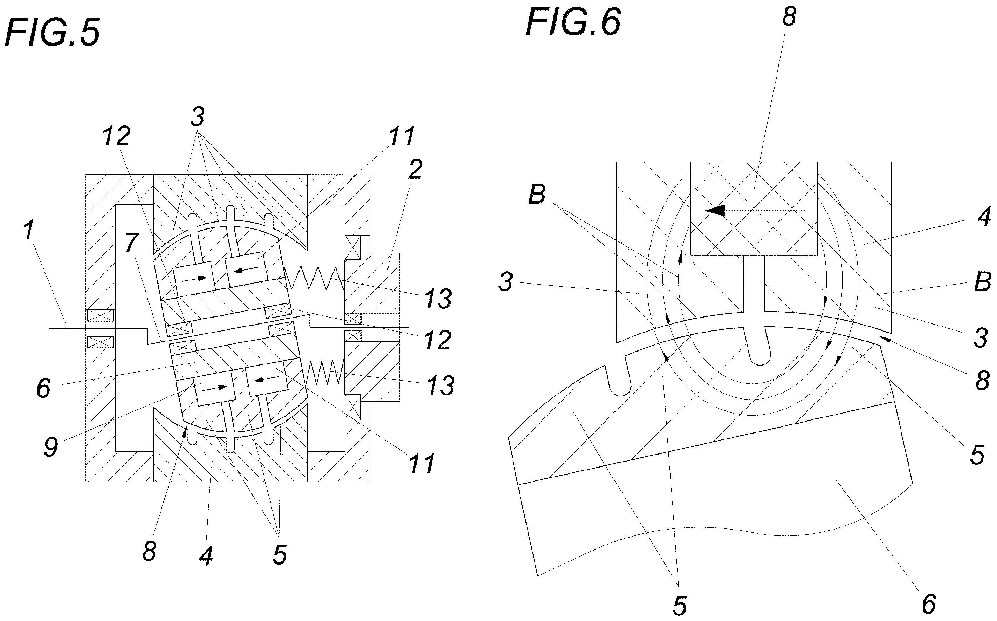

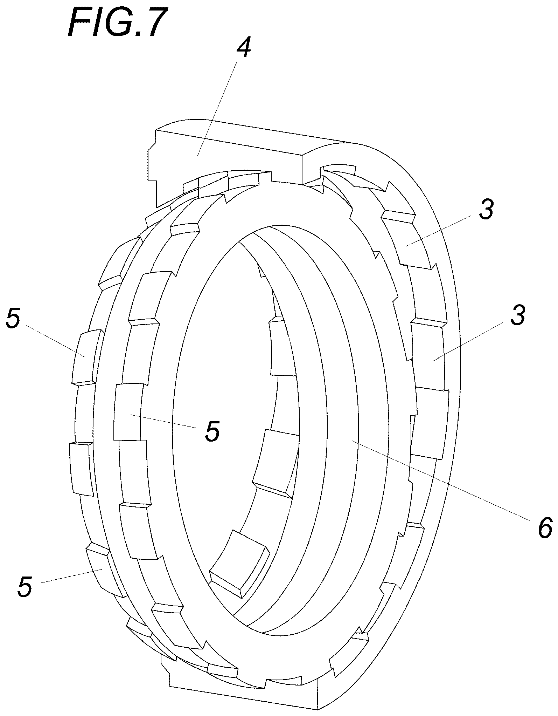

Ein erfindungsgemäßes Taumelgetriebe umfasst eine Antriebswelle 1 und eine Abtriebswelle 2, sowie einen umfänglich Zahnreihen 3 aufweisenden Stator 4 und einem umfänglich Zahnreihen 5 aufweisenden Rotor 6. In seiner Funktion als Taumelkörper ist der Rotor 6 auf einem, um einen Winkel gegenüber der Antriebswelle 1 versetzten Wellenabschnitt 7 frei drehbar gelagert. Der Wellenabschnitt 7 ist mit der Antriebswelle 1 starr verbunden, sodass eine Rotation der Antriebswelle 1 den Rotor 6 in eine Taumelbewegung versetzt. Stator 4 und Rotor 6 sind durch einen umfänglich durchgängigen Luftspalt 8 voneinander beabstandet. Der ferromagnetische Stator 4 und der ebenfalls ferromagnetische Rotor 6 werden über einen Magneten 9, der in den hier gezeigten Ausführungsformen als konzentrisch zur Antriebswelle 1 bzw. zum Wellenabschnitt 7 verlaufender Ringmagnet ausgeführt ist, magnetisiert. Die Ausrichtung des Dipols des Magneten 9 ist abhängig davon, ob er am Stator 4 oder am Rotor 6 angeordnet wird. Bei einer Anordnung am Stator 4 verläuft der Dipol achsparallel zur Antriebswelle 1. Bei einer Anordnung am Rotor 6 verläuft der Dipol achsparallel zum Wellenabschnitt 7. Um eine effiziente Drehmomentübertragung zu gewährleisten, wird der Magnet 9 dergestalt angeordnet, dass die Feldlinien B des Magneten 9 den Stator 4 bzw. den Rotor 6 möglichst symmetrisch durchsetzen. In den dargestellten Ausführungsformen ist dies der Fall, wenn der Magnet 9 umfänglich mittig angeordnet ist, wie dies besonders der Fig. 6 zu entnehmen ist. Aufgrund des Magnetfelds richten sich die Zähne der Zahnreihen 3, 5 zueinander aus, um den magnetischen Widerstand zu minimieren. Führt der Rotor 6 bedingt durch die Drehung der Antriebswelle 1 eine Taumelbewegung aus, sind die Zähne der Zahnreihen 3, 5 nicht mehr zueinander ausgerichtet. Um den Abstand der Zähne der Zahnreihen, und damit den magnetischen Widerstand, wieder zu minimieren, richten sich die Zahnreihen 3, 5 wieder zueinander aus. Da die einzelnen Zahnreihen 3, 5 des Stators 4 und des Rotors 6 zueinander verdreht angeordnet sind, kann diese Ausrichtung nur durch eine Drehbewegung des Rotors 4 bewerkstelligt werden, wodurch ein Drehmoment auf die mit dem Rotor 4 verbundene Abtriebswelle 2 übertragen wird. Zum Stärken oder Schwächen des auf den Stator 4 und den Rotor 6 wirkenden Magnetfeldes, bzw. des magnetischen Feldes kann ein zuschaltbarer Elektromagnet 10 vorgesehen sein. Mit einem zweitem, zum ersten Magneten 9 gegenteilig magnetisierten Magneten 11 kann die Feldliniendichte durch Zähne der Zahnreihen 3. 5 weiter erhöht werden. Zur besonders verschleißfreien, drehbaren Lagerung kann der Rotor 6 am Wellenabschnitt 7 über Kugellager 12 gelagert sein. Da die Taumelbewegung des Rotors 6 die Drehmomentübertragung auf die Abtriebswelle 2 erschwert, kann der Rotor 6 über ein eine Feder für den Taumelausgleich umfassendes Gelenk 13 mit der Abtriebswelle 2 verbunden sein. Der Fig. 6 ist der Verlauf einiger magnetischer Feldlinien B für die Ausführungsform mit zwei Zahnreihen am Stator und drei Zahnreihen am Rotor bei einer statorseitigen Anordnung des Magneten 9 zu entnehmen. Die Feldlinien verlaufen über eine erste Zahnreihe 3 des Stators 4 über den Luftspalt 8 zu einer ersten Zahnreihe 5 des Rotors 6, überqueren den Rotor 6 zu einer zweiten Zahnreihe 5 des Rotors 6, um wieder über den Luftspalt 8 die Distanz zu einer zweiten Zahnreihe 3 des Stators 4 zu überbrücken und wieder in den Magneten 9 einzumünden. Der Fig. 7 ist die Anordnung des Rotors 6 innerhalb des Stators 4 zu entnehmen, wobei insbesondere die verdrehte Anordnung axial benachbarter Zahnreihen 3, 5 zu erkennen ist.

## Patentansprüche

1. Taumelgetriebe mit einer Antriebswelle (1) und einer Abtriebswelle (2), einem umfänglich wenigstens eine Zahnreihe (3) aufweisenden Stator (4), einem umfänglich wenigstens eine Zahnreihe (5) aufweisenden, auf einem mit der Antriebswelle (1) starr verbundenen, um einen Winkel gegenüber der Antriebswelle (1) ausgeschwenkten Wellenabschnitt (7) frei drehbar gelagerten Rotor (6), der vom Stator (4) durch einen unmittelbar zwischen den Zahnreihen des Stators (4) und des Rotors (6) liegenden, umfänglich durchgängigen Luftspalt (8) beabstandet ist und wenigstens einem, am Stator (4) oder am Rotor (6) angeordneten, Magneten (9) zum Erzeugen eines magnetischen Flusses zwischen Rotor (6) und Stator (4), wobei Rotor (6) und Stator (4) eine unterschiedliche Anzahl an Zahnreihen (3, 5) aufweisen und axial benachbarte Zahnreihen (3,5) des Stators (4) und des Rotors (6) zueinander verdreht angeordnet sind, **dadurch gekennzeichnet, dass** die Zahnreihen (3, 5) des Stators (4) und des Rotors (6) ferromagnetisch und über den Magneten (9) magnetisierbar sind, und dass der Dipol des Magneten (9) ein zwischen dem Ein- und Austrittspunkt der Feldlinien (B) verlaufender Vektor ist und derart quer zu einer von einer Zahnreihe aufgespannten Ebene verläuft, dass sich die Feldlinien (B) immer über mindestens zwei axial benachbarte, zueinander verdrehte Zahnreihen (3, 5) des Stators (4) oder Rotors (6) schließen.

2. Taumelgetriebe nach Anspruch 1, **dadurch gekennzeichnet, dass** der Magnet (9) ein Permanentmagnet ist.

3. Taumelgetriebe nach Anspruch 1 oder 2, **dadurch gekennzeichnet, dass** der Magnet (9) ein konzentrisch zur Antriebswelle (1) angeordneter Ringmagnet ist.

4. Taumelgetriebe nach Anspruch 1 oder 2, **dadurch gekennzeichnet, dass** der Magnet (9) ein konzentrisch zum Wellenabschnitt (7) angeordneter Ringmagnet ist.

5. Taumelgetriebe nach einem der Ansprüche 1 bis 4, **dadurch gekennzeichnet, dass** ein Elektromagnet (10) zum Erzeugen eines weiteren magnetischen Flusses zwischen Rotor (4) und Stator (6) vorgesehen ist.

6. Taumelgetriebe nach einem der Ansprüche 1 bis 5, **dadurch gekennzeichnet, dass** ein zweiter, zum ersten Magneten (9) axial beabstandeter Magnet (11) mit gegenteiliger Magnetisierung vorgesehen ist.

7. Taumelgetriebe nach einem der Ansprüche 1 bis 6, **dadurch gekennzeichnet, dass** der Rotor (6) über Kugellager (12) an dem Wellenabschnitt (7) gelagert ist.

8. Taumelgetriebe nach einem der Ansprüche 1 bis 7, **dadurch gekennzeichnet, dass** der Rotor (6) mit der Abtriebswelle (2) über ein eine Feder für den Taumelausgleich umfassendes Gelenk (13) verbunden ist.

## Claims

1. Wobble gear with a drive shaft (1) and an output shaft (2), a stator (4) comprising at least one tooth row (3) around its circumference, a rotor (6) comprising at least one tooth row (5) around its circumference, which is mounted so as to rotate freely on a shaft section (7) which is rigidly connected to the drive shaft (1) and is pivoted at an angle relative to the drive shaft (1), wherein the rotor (6) is distanced from the stator (4) by an air gap (8) which is continuous around the circumference and located between the tooth rows of the stator (4) and the rotor (6), and at least one magnet (9) arranged on the stator (4) or on the rotor (6) for generating a magnetic flux between the rotor (6) and the stator (4), wherein the rotor (6) and the stator (4) have a different number of tooth rows (3, 5) and axially adjacent tooth rows (3, 5) of the stator (4) and the rotor (6) are arranged in a rotated manner relative to one another, **characterized in that** the tooth rows (3, 5) of the stator (4) and the rotor (6) are ferromagnetic and can be magnetized via the magnet (9), and that the dipole of the magnet (9) is a vector extending between the entry and exit points of the field lines (B) and extends transversely to a plane spanned by a tooth row in such a way that the field lines (B) always close over at least two axially adjacent, relative to each other rotated tooth rows (3, 5) of the stator (4) or rotor (6).

2. Wobble gear according to claim 1, **characterized in that** the magnet (9) is a permanent magnet.

3. Wobble gear according to claim 1 or 2, **characterized in that** the magnet (9) is a ring magnet arranged concentrically to the drive shaft (1).

4. Wobble gear according to claim 1 or 2, **characterized in that** the magnet (9) is a ring magnet arranged concentrically to the shaft section (7).

5. Wobble gear according to one of claims 1 to 4, **characterized in that** an electromagnet (10) is provided for generating a further magnetic flux between the rotor (4) and the stator (6).

6. Wobble gear according to one of claims 1 to 5, **characterized in that** a second magnet (11) with opposite magnetization is provided, which is axially distanced from the first magnet (9).

7. Wobble gear according to one of claims 1 to 6, **characterized in that** the rotor (6) is mounted on the shaft section (7) via ball bearings (12).

8. Wobble gear according to one of claims 1 to 7, **characterized in that** the rotor (6) is connected to the output shaft (2) via a joint (13) comprising a spring for wobble compensation.

## Revendications

1. Transmission oscillante dotée d'un arbre d'entrée (1) et d'un arbre de sortie (2), un stator (4) présentant en périphérie au moins une rangée de dents (3), un rotor (6) présentant en périphérie au moins une rangée de dents (5), monté de manière à pouvoir tourner librement sur une partie arbre (7) reliée de manière rigide à l'arbre d'entrée (1) et étant inclinée d'un angle par rapport à l'arbre d'entrée (1), lequel rotor est espacé du stator (4) par un entrefer (8) continu périphérique, situé directement entre les rangées de dents du stator (4) et du rotor (6), et au moins un aimant (9) disposé sur le stator (4) ou sur le rotor (6) pour produire un flux magnétique entre le rotor (6) et le stator (4), le rotor (6) et le stator (4) ayant chacun un nombre différent de rangées de dents (3, 5) et les rangées de dents (3, 5) axialement adjacentes du stator (4) et du rotor (6) étant disposées à un décalage de rotation mutuel, **caractérisé en ce que** les rangées de dents (3, 5) du stator (4) et du rotor (6) sont ferromagnétiques et peuvent être magnétisées par l'aimant (9), et **en ce que** le dipôle de l'aimant (9) est un vecteur s'étendant entre le point d'entrée et le point de sortie des lignes de champ (B) et s'étend transversalement à un plan défini par une rangée de dents, de telle sorte que les lignes de champ (B) se ferment toujours sur au moins deux rangées de dents (3, 5) du stator (4) ou du rotor (6) axialement adjacentes et tournées l'une par rapport à l'autre.

2. Transmission oscillante selon la revendication 1, **caractérisée en ce que** l'aimant (9) est un aimant permanent.

3. Transmission oscillante selon la revendication 1 ou 2, **caractérisée en ce que** l'aimant (9) est un aimant annulaire disposé de manière concentrique par rapport à l'arbre d'entrée (1).

4. Transmission oscillante selon la revendication 1 ou 2, **caractérisée en ce que** l'aimant (9) est un aimant annulaire disposé de manière concentrique par rapport à la section d'arbre (7).

5. Transmission oscillante selon l'une des revendications 1 à 4, **caractérisée en ce qu'**un électroaimant (10) est prévu pour générer un flux magnétique supplémentaire entre le rotor (4) et le stator (6).

6. Transmission oscillante selon l'une des revendications 1 à 5, **caractérisée en ce qu'**un deuxième aimant (11) à magnétisation opposée, espacé axialement du premier aimant (9), est prévu.

7. Transmission oscillante selon l'une des revendications 1 à 6, **caractérisée en ce que** le rotor (6) est monté sur la section d'arbre (7) via des roulements à billes (12).

8. Transmission oscillante selon l'une des revendications 1 à 7, **caractérisée en ce que** le rotor (6) est relié à l'arbre de sortie (2) par l'intermédiaire d'une articulation (13) comprenant un ressort pour la compensation du mouvement oscillant.
